# EUROPEAN PATENT SPECIFICATION

(11) **EP 1 498 498 B1**
(45) Date of publication and mention of the grant of the patent: **13.09.2006**
(21) Application number: 03015603.8
(22) Date of filing: 15.07.2003
(51) Int. Cl.: C13K 5/00, A23C 21/00

(54) **Whey powders of improved taste**
Molke-Pulver mit verbessertem Geschmack
Poudre de petit-lait avec une qualité de goût améliorée

(43) Date of publication of application: 19.01.2005
(73) Proprietor: Kraft Foods R & D, Inc. Zweigniederlassung München, 81737 München (DE)
(72) Inventor: Balzer, Hartmut Dr., 85238 Petershausen (DE); Pfnür, Petra Dr., 85774 Unterföhring (DE); Pfeifer, Jochen Dr., 82377 Penzberg (DE)
(74) Representative: Morf, Jan Stefan

(56) References cited:
- EP-A- 0 249 368
- GB-A- 1 036 368
- GB-A- 2 293 825
- US-A- 1 954 602
- US-A- 2 197 804
- US-A- 4 088 791
- US-A- 4 202 909
- DATABASE BIOSIS [Online] BIOSCIENCES INFORMATION SERVICE, PHILADELPHIA, PA, US; 1977 GOLDMAN A ET AL: "USE OF CRUDE BETA LACTOSE IN HIGH RATIO CAKES" Database accession no. PREV197866002162 XP002264274 & NEW ZEALAND JOURNAL OF DAIRY SCIENCE AND TECHNOLOGY, vol. 12, no. 2, 1977, pages 88-93, ISSN: 0300-1342

## Description

### FIELD OF THE INVENTION

The present invention refers to whey powders and whey permeate powders of improved taste with regard to saltiness, dry mouthfeel and sweetness, to a process for producing same, to the use of such powder in food applications and to products, especially confectionery and chocolate, made by the use of such powder.

### BACKGROUND OF THE INVENTION

Whey is obtained as a by-product from the production of cheese or casein. It can be used as such or after ultrafiltration as whey permeate to produce whey powder or whey permeate powder which are themselves used in food applications. Whey contains normally about 11 to 12% by weight of proteins which are removed by ultrafiltration. Whey permeate contains 0 to about 3% by weight of proteins.

The conventional process for producing whey powder and whey permeate powder from whey and whey permeate is to cool the suspensions to not less than 15°C, preferably to 30° to 40°C to initiate crystallization of lactose (see A. Töpel, Chemie und Physik der Milch, VEB Fachbuchverlag, Leipzig 1981, pp. 47-54) and the obtained suspensions are subsequently spray dried, giving whey powder and whey permeate powder respectively.

Whey powder and whey permeate powder are used as a cheap ingredient in food applications. They are used as substitutes for more expensive ingredients. However, whey powder and whey permeate powder produced by the above-described conventional processes exhibit several negative sensory attributes. They are salty, metallic or bitter and they result in a dry, powdery mouthfeel when used in significant amounts in certain food applications esp. chocolate. Furthermore, their sweetness is low.

The object of the present invention is to provide whey powder and whey permeate powder with improved taste.

### SUMMARY OF THE INVENTION

The present invention provides improved whey powder and whey permeate powder which contain at least 60, preferably at least 70 and most preferably at least 80% by weight of β-lactose.

The invention further provides whey powder and whey permeate powder containing at least 60% by weight of β-lactose which are obtainable by the steps of:
(i) adjusting the pH of whey and whey permeate respectively to a value of about 9,
(ii) optionally partially demineralizing the product obtained in step (i), and
(iii) drying the product of step (ii) before crystallization takes place.

The invention further relates to a corresponding process for producing such whey powder and whey permeate powder and to the use of such powders as a substitute replacing conventional whey powder, whey permeate powder, sucrose or any other carbohydrate in confectionery products and chocolate.

Finally, the invention relates to products, especially food products, confectionery products and chocolate which have been made by the use of the improved whey powder and whey permeate powder.

### DETAILED DESCRIPTION OF THE INVENTION

In conventional processes for the production of whey powder and whey permeate powder, whey and whey permeate respectively are cooled to not less than 15°C to initiate crystallization of lactose. The suspensions are subsequently dried, giving whey powder and whey permeate powder respectively. Both processes mainly deliver lactose in its α-form, whey powder containing about 70% by weight α-lactose and whey permeate powder containing about 80% by weight α-lactose. In contrast, manufacturing of whey or whey permeate according to the present invention delivers a powder that is improved in taste and contains at least 60% by weight of β-lactose. The dry, floury mouthfeel of the conventional α-lactose-containing powders is reduced by the powders according to the invention which contain β-lactose and the powders according to the invention have an increased sweetness and a better solubility.

The conversion of the lactose primarily into its β-isomer is accomplished by drying without preceding crystallization. Whey powder and whey permeate powder containing at least 60% by weight of β-lactose can be prepared by spray drying without preceding crystallization. A preferred process for drying the whey and whey permeate respectively is effected by roller drying or a similar technology. Whey powder and whey permeate powder containing more than 80% by weight of β-lactose can be prepared with this drying technique. The technique of roller drying is for example disclosed in US 1,954,602 and GB 1,036,368.

US 4088 791 discloses the obtention of neutralized powdered whey by means of a similar process.

It is known in the art that α-lactose can be transformed into β-lactose, e.g. by crystallization from solution in methanol (US-A-3,511,226), by adding small amounts of water to α-lactose and extrusion (US-A-4,083,733 and JP 62115300) or by treating α-lactose at a temperature above 120°C, under pressure and in the presence of alcohols (US-A-4,799,966), however, the production of whey powder and whey permeate powder containing at least 60% by weight of β-lactose is not known in the art.

A significant taste improvement is accomplished by increasing the pH value without physically removing those minerals.

A preferred process for preparing the improved whey powder and whey permeate powder, whey or whey permeate - obtained as waste material from ultrafiltration of conventional whey - includes the following steps:
i) adjusting the pH of whey and whey permeate respectively to a value of about 9,
ii) optionally partially demineralizing the product obtained in step i), and
iii) drying the product of step ii) before crystallization takes place.

In contrast to a conventional process no dedicated crystallization step is necessary.

The sequence of steps i) and ii) can be reversed, i.e. whey and whey permeate can first be demineralized and the pH then adjusted. Step ii) is optional or the degree of demineralization may be 0.

The pH adjustment or alkalization can be effected by the addition of alkaline material, preferably aqueous solutions of sodium hydroxide, potassium hydroxide, sodium carbonate, potassium carbonate and calcium hydroxide. The pH is adjusted to a value of about 9.0. The pH adjustment improves the taste quality considerably.

pH adjustment of whey and whey permeate is known in the prior art but for different purposes. Neutralization/precipitation - sometimes in combination with a heat treatment and/or phosphate treatment and separation - is used to remove certain fractions such as proteins and/or minerals (see for example US-A-5,639,501 and US-A-3,864,506). Neutralization by calcium or magnesium compounds is described in EP-A-0,619,075 to improve spray drying specifically of acid whey/whey permeate. Neutralization and acidity control is described in US-A-2,232,248 to improve drying. US-A-5,185,174 describes the addition of CaO and phosphate to make a non-hygroscopic powder. GB-A-2,293,825 describes a process for manufacturing acid casein whey wherein concentrated raw liquid whey is treated with a base to raise the pH to 6.0 to 6.9 and further concentrated by nanofiltration. The purpose of the pH adjustment is not mentioned in that patent. Furthermore, the first concentration step is done by ultrafiltration with which the lactose is removed. The use of whey permeate is not described in that patent.

The pH-adjusted whey or whey permeate is then optionally partially demineralized. This can be done by electrodialysis, ion exchange or preferably by nanofiltration or crystallization. This treatment can - as mentioned above - be effected first before the whey or whey permeate is pH-adjusted. The demineralization of whey by different techniques is for example described in US-A-5,639,501, EP-A-0,408,756, EP-A-0,536,612 and JP-A-63087944. The preferred nanofiltration technique is described in Kelly P. M. et al., IDF Special Issue 9201 (1992) 130-140 or in van der Horst H. C. et al., IDF Bulletin 311 (1996) 9-11.

Before or after the pH adjustment, the whey or whey permeate is concentrated by evaporation to a solid content of preferably about 70%. For this purpose, the whey or whey permeate is heated to a temperature in the range of 50°C to 80°C and moisture is partially removed undere vacuum for example in a multi-effect falling film evaporator as described, e.g. in Spellacy J. R. in 'Casein, dried and condensed whey' Lithotype Process Co., San Francisco (1953), pp. 489 ff. or US 6,335,045.

The concentrated, pH-adjusted and optionally partially demineralized whey or whey powder is finally dried - before crystallization of the lactose to α-lactose can proceed - by any convenient technique, preferably by spray drying or even more preferably by roller drying. Spray drying results in a whey powder or whey permeate powder which contains at least 60% by weight of β-lactose. Higher contents of for example more than 80% by weight of β-lactose can be obtained by the preferred roller drying. The technique of roller drying is for example described in US 1,954,602 and GB 1,036,368. A preferred roller temperature is for example 140°C. Optimum temperature adjustment is important to get an optimum yield during drying which is governed by factors such as mineral content and degree of browning. However, temperatures in the range of 110 to 180°C can be used. Roller temperature and speed may be adjusted according to the mineral content of the whey material.

The combination of the pH adjustment, optional partial demineralization and specific drying which gives lactose in its β-form instead of its α-form, finally provides a whey powder or whey permeate powder which is superior in taste. Typical components of whey from cows' milk are lactose, proteins, minerals and milk fat. Minerals are responsible for the salty, metallic taste of whey powder. Their content is typically in the range of about 7 to 11% by weight. Chloride, magnesium and calcium are major contributors. It has been identified that the overall taste intensity is significantly reduced if the pH value is increased. A preferred reagent is sodium hydroxide, but the same effect is also achieved by using potassium hydroxide or sodium, potassium carbonate or calcium hydroxide. It may also be accomplished by any other process, e.g. electrodialysis, ion exchange or crystallization. The significance of the invention is due to the fact that a strong reduction of the salty taste is achieved although the minerals are not physically removed, thus generation of undesired side streams is avoided. It was proven that the solubility of several salts responsible for saltiness is reduced. This applies for example to magnesium which is bound as hydroxide at higher pH values, while it is freely available for the receptor cells on the tongue at lower pH values. A second effect may be directly related to increased pH values while acidity is reduced. Acidity or acid taste perception is not solely related to free H⁺ ions but also to acids HA which are the predominant species in weak acids.

In contrast to a conventional process no intended crystallization step is done. Whey powder and whey permeate powder is conventionally precrystallized before spray drying. In the process described by this invention crystallization needs to be avoided in order to obtain a high yield of β-lactose. For roller drying, crystallization is conventional and in this process not relevant.

The whey powder or whey permeate powder according to the present invention can be used to replace conventional dairy powders, sucrose or any other carbohydrate in food applications to improve sensory characteristics by simultaneously reducing ingredient costs. The whey powder and whey permeate powder of the present invention are especially useful in the production of confectionery and chocolate.

The invention is further illustrated by the following examples.

### EXAMPLES

### Example 1

Whey permeate, obtained as a waste material from cheese production was partially demineralized by nanofiltration removing mineral ions according to the table below. The obtained solution was concentrated to 60% solids content by heating to 70°C and evaporation. After pH adjustment with aqueous NaOH to a pH value of 9, it was dried on a roller dryer at a temperature of 140°C (2.5 bar steam pressure). The obtained product was a powder containing 85% by weight β-lactose. Sensory results from an expert panel clearly demonstrated that the whey permeate powder of this example was superior in terms of sweetness and saltiness compared with conventional whey permeate powder containing mainly α-lactose. It was also superior to powders that were produced by eliminating any of the mentioned processing steps and esp. superior to powders that were prodced without pH adjustment to 9.0. The impact of quality improvement by pH adjustment was not expected as such.

The product was added to standard milk chocolate mixtures replacing sweet whey powder and sucrose.

| | Original | Step 1 Nanofiltration | Step 2 pH adjustment |
|---|---|---|---|
| Total ash | 8.0 | 4.6 | 4.6 |
| Sodium | 0.7 | 0.4 | 0.7 |
| Potassium | 2.7 | 1.3 | 1.3 |
| Magnesium | 0.1 | 0.1 | 0.1 |
| Calcium | 0.4 | 0.4 | 0.4 |
| Chloride | 1.9 | 0.5 | 0.5 |
| Phosphate | 0.7 | 0.5 | 0.5 |
| Total protein | 4.0 | 2.3 | 2.3 |
| pH | 6.5 | 6.5 | 9.0 |

### Example 2

Whey permeate, obtained as a waste material from cheese production was concentrated to 75% solids content by heating to 70°C and evaporation. After pH adjustment with aqueous sodium hydroxide to a pH value of 8.5, it was dried on a roller dryer at a temperature of 120°C (1.5 bar steam pressure). The obtained product was a powder containing 79% by weight β-lactose. Sensory results from an expert panel clearly demonstrated that the whey permeate powder of this example was superior in terms of sweetness and saltiness compared with roller ried whey permeate powder that was not pH adjusted. The product was added to standard milk chocolate mixtures replacing sweet whey powder and sucrose.

## Claims

1. Process for producing whey powder or whey permeate powder containing at least 60% by weight of β-lactose by the steps of:
(i) adjusting the pH of whey and whey permeate respectively to a value of about 9,
(ii) optionally partially demineralizing the product obtained in step (i), and
(iii) drying the product of step (ii) before crystallization takes place.

2. Process according to claim 1, **characterized in that** the sequence of steps (i) and (ii) is reversed.

3. Process according to claims 1 or 2, **characterized in that** the demineralization is effected by electrodialysis, ion exchange, nanofiltration or crystallization.

4. Process according to claims 1 to 3, **characterized in that** the drying of the pH-adjusted and optionally partially demineralized product is effected by spray drying or roller drying.

5. Use of whey powder or whey permeate powder containing at least 60% by weight of β-lactose as substitute to replace conventional whey powder, whey permeate powder, sucrose or any other carbohydrate in confectionary applications.

6. Use of claim 5 in the production of chocolate.

7. Use of claims 5 or 6, **characterized in that** the whey powder or whey permeate powder is obtainable by the steps of
(i) adjusting the pH of whey and whey permeate respectively to a value of about 9,
(ii) optionally partially demineralizing the product obtained in step (i), and
(iii) drying the product of step (ii) before crystallization takes place.

8. Use of claim 7, **characterized in that** the sequence of steps (i) and (ii) is reversed.

9. Use of claims 7 to 8, **characterized in that** the demineralization is effected by electrodialysis, ion exchange, nanofiltration or crystallization.

10. Use of claims 7 to 9, **characterized in that** the drying of the pH-adjusted and optionally partially demineralized product is effected by spray drying or roller drying.

11. Chocolate obtainable by the use of whey powder or whey permeate powder according to claims 5 to 10.

12. Use of whey powder or whey permeate powder containing at least 60% by weight of β-lactose to reduce salty taste, preferably without physically removing minerals, in confectionary applications, preferably in chocolate.

## Patentansprüche

1. Verfahren zur Erzeugung von Molkepulver oder Molkepermeatpulver, das wenigstens 60 Gew.-% β-Lactose enthält, durch die Schritte:
(i) Einstellen des pH-Werts von Molke bzw. Molkepermeat auf einen Wert von etwa 9,
(ii) gegebenenfalls teilweise Demineralisieren des in Schritt (i) erhaltenen Produkts und
(iii) Trocknen des Produkts aus Schritt (ii), bevor die Kristallisation stattfindet.

2. Verfahren gemäß Anspruch 1, **dadurch gekennzeichnet, dass** die Reihenfolge der Schritte (i) und (ii) umgekehrt ist.

3. Verfahren gemäß Anspruch 1 oder 2, **dadurch gekennzeichnet, dass** die Demineralisierung durch Elektrodialyse, lonenaustausch, Nanofiltration oder Kristallisation bewirkt wird.

4. Verfahren gemäß den Ansprüchen 1 bis 3, **dadurch gekennzeichnet, dass** das Trocknen des pH-eingestellten und gegebenenfalls teilweise demineralisierten Produkts durch Sprühtrocknen oder Walzentrocknen bewirkt wird.

5. Verwendung von Molkepulver oder Molkepermeatpulver, das wenigstens 60 Gew.-% β-Lactose enthält, als Ersatzstoff zum Ersatz von herkömmlichem Molkepulver, Molkepermeatpulver, Saccharose oder irgendeinem anderen Kohlenhydrat bei Süßwarenanwendungen.

6. Verwendung nach Anspruch 5 bei der Schokoladenherstellung.

7. Verwendung nach Anspruch 5 oder 6, **dadurch gekennzeichnet, dass** das Molkepulver oder Molkepermeatpulver erhältlich ist durch die Schritte:
(i) Einstellen des pH-Werts von Molke bzw. Molkepermeat auf einen Wert von etwa 9,
(ii) gegebenenfalls teilweise Demineralisieren des in Schritt (i) erhaltenen Produkts und
(iii) Trocknen des Produkts aus Schritt (ii), bevor die Kristallisation stattfindet.

8. Verwendung nach Anspruch 7, **dadurch gekennzeichnet, dass** die Reihenfolge der Schritte (i) und (ii) umgekehrt ist.

9. Verwendung nach den Ansprüchen 7 bis 8, **dadurch gekennzeichnet, dass** die Demineralisierung durch Elektrodialyse, lonenaustausch, Nanofiltration oder Kristallisation bewirkt wird.

10. Verwendung nach den Ansprüchen 7 bis 9, **dadurch gekennzeichnet, dass** das Trocknen des pH-eingestellten und gegebenenfalls teilweise demineralisierten Produkts durch Sprühtrocknen oder Walzentrocknen bewirkt wird.

11. Schokolade, erhältlich durch Verwendung von Molkepulver oder Molkepermeatpulver gemäß den Ansprüchen 5 bis 10.

12. Verwendung von Molkepulver oder Molkepermeatpulver, das wenigstens 60 Gew.-% β-Lactose enthält, zur Verringerung des salzigen Geschmacks bei Süßwarenanwendungen, vorzugsweise Schokolade, vorzugsweise ohne physikalisch Mineralien zu entfernen.

## Revendications

1. Procédé pour produire une poudre de lactosérum ou une poudre de perméat de lactosérum contenant au moins 60 % en poids de β-lactose avec les étapes consistant à :
(i) régler le pH du lactosérum et du perméat de lactosérum respectivement à une valeur d'environ 9,
(ii) éventuellement déminéraliser partiellement le produit obtenu à l'étape (i), et
(iii) sécher le produit de l'étape (ii) avant que la cristallisation ait lieu.

2. Procédé selon la revendication 1, **caractérisé en ce que** la séquence d'étapes (i) et (ii) est inversée.

3. Procédé selon les revendications 1 ou 2, **caractérisé en ce que** la déminéralisation est effectuée par électrodialyse, échange d'ions, nanofiltration ou cristallisation.

4. Procédé selon les revendications 1 à 3, **caractérisé en ce que** le séchage du produit au pH réglé et éventuellement partiellement déminéralisé est effectué par séchage par pulvérisation ou séchage sur tambour.

5. Utilisation de poudre de lactosérum ou de poudre de perméat de lactosérum contenant au moins 60 % en poids de β-lactose en tant que substitut pour remplacer la poudre de lactosérum traditionnelle, la poudre de perméat de lactosérum, le saccharose ou tout autre glucide dans des applications en confiserie.

6. Utilisation selon la revendication 5 dans la production de chocolat.

7. Utilisation selon les revendications 5 ou 6, **caractérisée en ce que** la poudre de lactosérum ou la poudre de perméat de lactosérum peut être obtenue par les étapes consistant à :
(i) régler le pH du lactosérum et du perméat de lactosérum respectivement à une valeur d'environ 9,
(ii) éventuellement déminéraliser partiellement le produit obtenu à l'étape (i), et
(iii) sécher le produit de l'étape (ii) avant que la cristallisation ait lieu.

8. Utilisation selon la revendication 7, **caractérisée en ce que** la séquence des étapes (i) et (ii) est inversée.

9. Utilisation selon les revendications 7 à 8, **caractérisée en ce que** la déminéralisation est effectuée par électrodialyse, échange d'ions, nanofiltration ou cristallisation.

10. Utilisation selon les revendications 7 à 9, **caractérisée en ce que** le séchage du produit au pH réglé et éventuellement partiellement déminéralisé est effectué par séchage par pulvérisation ou séchage sur tambour.

11. Chocolat pouvant être obtenu en utilisant de la poudre de lactosérum ou de la poudre de perméat de lactosérum selon les revendications 5 à 10.

12. Utilisation de poudre de lactosérum ou de poudre de perméat de lactosérum contenant au moins 60 % en poids de β-lactose pour réduire le goût salé, de préférence sans éliminer physiquement les minéraux, dans des applications en confiserie, de préférence dans du chocolat.
